Europäisches Patentamt

(19) European Patent Office

Office européen des brevets

(11) Publication number : **0 415 520 B1**

(12) **EUROPEAN PATENT SPECIFICATION**

(45) Date of publication of patent specification :
19.01.94 Bulletin 94/03

(51) Int. Cl.⁵ : **B65D 75/30, B65B 11/50**

(21) Application number : **90306786.6**

(22) Date of filing : **21.06.90**

(54) **Easy-open package and method of forming the same.**

(30) Priority : **29.08.89 GB 8919525**

(43) Date of publication of application :
**06.03.91 Bulletin 91/10**

(45) Publication of the grant of the patent :
**19.01.94 Bulletin 94/03**

(84) Designated Contracting States :
**AT BE CH DE DK ES FR GB GR IT LI LU NL SE**

(56) References cited :
**EP-A- 0 328 245**
**GB-A- 999 214**
**US-A- 3 780 187**

(73) Proprietor : **W.R. Grace & Co.-Conn.**
**Grace Plaza, 1114 Avenue of the Americas**
**New York, New York 10036-7794 (US)**

(72) Inventor : **Bongiana, Andrea P.**
**Via dei Valtorta 6**
**I-20127 Milano (IT)**
Inventor : **Wyatt, Steven**
**Via salvo D'Acquisto 9**
**I-20014 Nerviano (Milano) (IT)**

(74) Representative : **Barlow, Roy James et al**
**J.A. KEMP & CO. 14, South Square Gray's Inn**
**London WC1R 5LX (GB)**

## Description

The present invention relates to a film package which can readily be opened without the use of cutting implements. Such packages are frequently termed "easy-open packs". The invention also relates to a method of forming such a package which, for example, is known from EP-A-0 328 245.

In the past it has been known to insert a release sheet portion at the corner of a film pack as a way of disenabling the bonding action at that corner, or to use other means of weakening the bond between two packaging films, to facilitate starting delamination of the pack at the corner along the interface between two packaging sheets. Where the pack is to be subjected to heat treatment after sealing, these usual easy-open features are unsatisfactory as the seal would be inadequate.

The present invention is concerned with a type of pack in which a product is placed on a tray and the assembly of product and tray is then totally enclosed within packaging films, such as one including a special barrier layer to improve the ability of the film to hinder or to exclude ingress of gas or moisture at both the side of the tray where the product rests, and the opposite side of the tray to preserve the packaged product. The term "barrier layer" is used to denote a layer of a film which is chosen for its especially good properties of gas impermeability.

According to one aspect of the present invention there is provided a pack comprising:- a laminar support having at least one product thereon; a multi-layer first film covering the reverse side of the support i.e. the one other than that on which the or each product rests; and a second film covering the or each product and the side of the support on which it rests to encapsulate the product(s) against the support; characterised in that the first and second films project laterally beyond the perimeter of the support around its full extent and being sealed together; in that the bond strength of the bond between two layers of said first film close to the interface between the first and second films is lower than the bond strength between the first and second films at said interface, whereby delamination at said lower strength bond is possible and in that said support is more rigid than either of said first and second films.

A second aspect of the present invention provides a method of forming an easy-open pack comprising:- placing at least one product on one side of a relatively rigid support; applying a multi-layer first film to the reverse side of the support; and covering the product and said one side of the support with a second film; characterised in that the first and second films each extend laterally beyond the perimeter of said support and are bonded to one another at the projecting part; and in that said first film has a bond strength between two adjacent layers close to the interface between the first and second films which is lower than the bond strength between said first and second films, and in that said support is more rigid than either of said first and second films.

The effectiveness of the present invention relies on the fact that the strength of the sealing layers of the first and second films, on sealing the pack, is considerably higher than that of the bond between the portions of the first film at the weak point.

In order that the present invention may more readily be understood the following description is given, merely by way of example, reference being made to the accompanying drawings, in which:-

FIGURE 1 is a detail schematic view of a corner of a pack in accordance with the present invention at the start of the delamination of the. films during opening of the pack;

FIGURE 2 is a view showing the pack of Figure 1 but after further delamination;

FIGURE 3 shows the corner of the pack after rupture of the delaminated portion of the lower film and before removal of the cover film in its entirety; and

FIGURE 4 is a schematic side view of packaging apparatus for forming a pack in accordance with the present invention.

This invention is in particular concerned with a type of pack in which a tray, for example of high density polyethylene (HDPE) or polyester, has a product placed on it and the combination of the tray and the product finishes up enveloped between two films. These comprise (i) a first or bottom film, underneath the tray, of multi-layer composition, and (ii) a second or top film, above the tray and the product, which is sealed to an exposed portion of the lower film outboard of the rim of the tray. Preferably the upper film is itself of multi-layer construction.

We now propose to "engineer" a weak point between the layers, or two of the layers, of the multi-layer bottom film, closer to the tray-contacting surface of that film than to the opposite surface which will be outermost in the finished pack, whereby the delamination between a minority upper portion of the bottom film and a majority lower portion of the same film can be initiated.

As examples of the manner in which the weak point can be "engineered", one possibility would be for a bonding layer between two layers having little or no affinity for each other (for example a strength-imparting layer and a sealing layer) to give a bond which is weaker than the bond between the top and bottom films and preferably also weaker than any other bond between layers of the multi-layer bottom film. Delamination can be initiated between the minor thickness portion of the first film 1 including the sealing layer and the major thickness remainder of the first film at the "weak point" defined by the bonding layer. Another possibility will be for the structure of the bottom film to include direct contact between two layers which have some affinity for each other so as to bond together on contact but in a less permanent way than do other layers of the multi-layer film. It is within the scope of the present invention for other possibilities of providing a weak point in the structure of the bottom film to be used.

The tray has a sharp edge to its rim, thus acting as a separating tool to assist in rupture of the minority film portion closer to the tray, in order to enable rupture of the part which projects beyond the tray rim from the part which is in register with the tray.

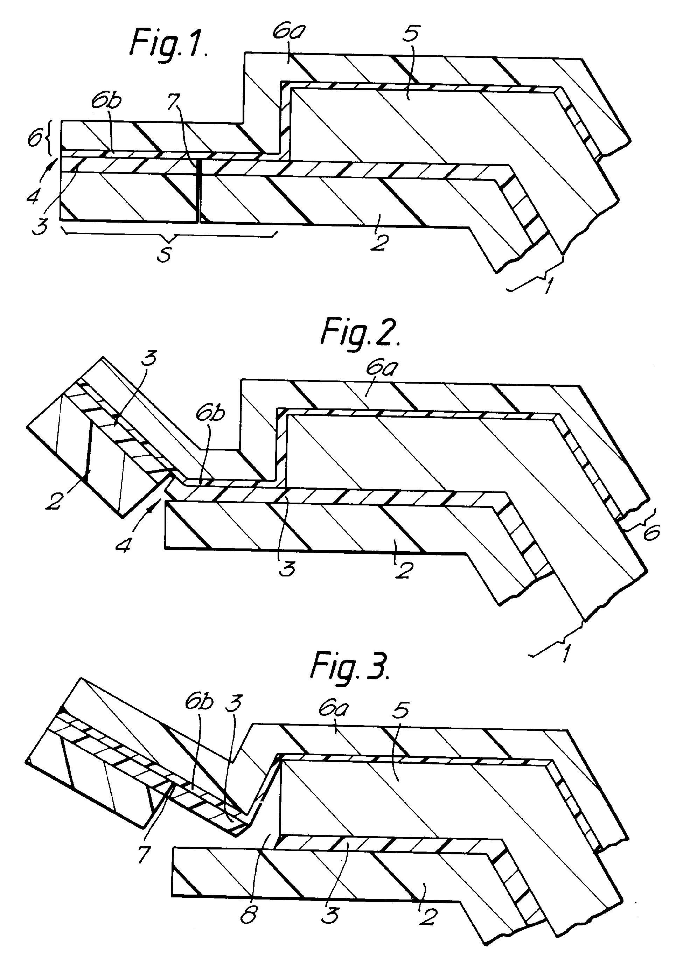

Figure 1 shows the multi-layer bottom film 1 as comprising a lower portion 2 and an upper portion 3 separated by a weak point 4. The underside of the tray 5, in this case formed of HDPE, is covered by the lower film 1.

The upper film 6, in this case of twin-layer construction, covers the top of the tray 5, and forms a vacuum skin pack with the product (not shown) on the tray. Furthermore, the upper film 6 projects laterally to be joined to the lower film 1 over a seal region S where the two films project beyond the rim of the tray.

The upper film 6 has its lower or sealing layer 6b of a material which readily seals to the upper portion 3 of the lower film 1. Its outer remaining layer 6a may optionally include an oxygen barrier material.

In order to facilitate opening of the pack, the lower film 1 has a pre-scored cut 7 which extends diagonally across one corner of the finished pack, i.e. close to a corner of the tray 5. This transverse cut can be seen in section in Figure 1.

The consumer then grasps the rim of the tray 5 and, with the other hand, grasps the outer edge of the seal region S (embracing films 1 and 6) and pulls that edge region upwardly. This start of the tearing is shown in Figure 2 which shows then that at the same time the bottom film 1 begins to delaminate at the weak point 4. As delamination proceeds, the Figure 3 situation is arrived at where the sealing portion 3 of the lower film 1 has become ruptured at 8 by the edge of the rim of the tray 5, and at this stage the pack begins to open as the lower layer 6b of the upper film peels away from the rim of the tray. As this peeling action continues, the product is exposed for use.

The edge of the tray is thus required to be sufficiently rigid and sharp to act as a cutting knife to help in rupturing the thin delaminated upper portion 3 of the lower film 1. In order to ensure that the upper portion 3 of the lower film 1 can rupture adjacent the edge of the tray rim 5, the thickness of the upper portion 3 of the lower film 1 is much less than that of the lower portion 2 of the lower film 1 (i.e. the weak point 4 occurs near the bond between the lower and upper films 1 and 6, respectively).

Other means of prompting delamination at the weak point 4 may be employed, and one possibility would be to provide a projecting tab secured, for example adhesively, to the upper surface of the upper film 6 in order to allow that film to be peeled away from the lower film 1. With such an arrangement an optional second tab fastened to the underside of the lower film 1 may be used. These measures would render redundant the pre-score line 7 shown in Figure 1. For this delamination to occur, the bond between the or each tab and the film surface to which it is secured must be significantly greater than the bond strength at the weak point between portions 2 and 3 of the bottom film 1.

Generally, the structure of the multi-layer lower film 1 comprises:-

| STRENGTH-IMPARTING LAYER | "ENGINEERED" WEAK POINT | SEALANT LAYER |
| --- | --- | --- |

It will of course be appreciated that in this general "formula" the weak point is not always a pair of layers but may for example be the interface between a strength-imparting layer and a sealant layer which naturally exhibit a weak affinity for one another. However, the above general formula may equally give rise to a multi-layer film of many more than two layers such that there may be more than one layer in the strength-imparting layer, for example a strength-imparting bulk layer and a special barrier layer with or without appropriate adhesive ties between them, and equally the weak point may itself comprise additional layers necessary to give the desired weak bond which is to be weaker than the bond between the sealing layers of the upper and lower films.

The "strength-imparting" layer may for example be polystyrene, nylon, ethylene vinyl acetate (EVA) or low density polyethylene (LDPE); if a special barrier layer is present this may, for example, comprise polyvinylidene chloride (PVDC), or nylon, or ethylene vinyl alcohol (EVOH); the sealing layers may, for example, be of an ionomer, or LDPE or EVA which may or may not be electronically cross-linked.

Should there be more than one weak bond in the structure of the lower film 1 having bond strengths of the same order of magnitude and less than the bond strength at any other inter-layer bonds, then of these weak bond strengths the one nearest the sealant layer (the upper layer 3 of the lower film 1) will be the first to delaminate as the Figure 2 configuration is achieved. This is the bond which is referred to herein as the "engineered" weak point.

The package in accordance with the present invention can be used for containing ready-to-heat meals, which may be packaged either before or after heat treatment of the meal. It has been found that even after moist heat treatment the pack is securely sealed but nevertheless particularly easy to open.

The rupturing action of the edge of the tray rim 5 is important in avoiding a situation where the delamination started at the weak point 4 in Figure 1 might continue at that same interface between the upper portion 3 and the lower portion 2 of the bottom film 1 across the whole package, in which case the tray 5 and the product will remain encapsulated between the upper film 6 and the delaminated upper portion 3 of the bottom film 1.

By trimming the package so that a constant projection of the bottom film 1 beyond the edge of the rim of the tray 5 occurs around the whole of the tray, the opening force required for the delamination of Figure 1 to begin is known and is constant around the whole package.

It is important for the resistance to tearing of the layer or layers constituting the upper portion 3 of the bottom film 1 to be low enough for rupture of the upper portion 3 by the cutting knife effect of the edge of the tray rim 5 to succeed.

In order to achieve a reliable delamination at the weak point 4, it is advantageous for the interface between the upper film 6 and the lower film 1 to be at least four times stronger than the weak point bond, and preferably as much as ten times greater. However, it is equally important that at the weak point the bond strength should be adequate for the pack to withstand the effects of heat treatment, for example immersion in a water bath at a temperature of up to 100°C for a considerable period (for example up to 45 minutes) without the weak point bond delaminating spontaneously.

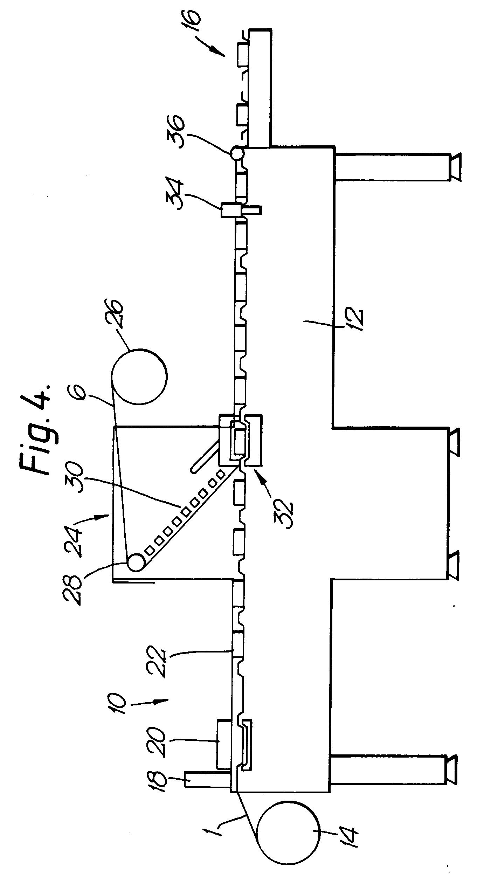

By way of example, Figure 4 illustrates a packaging apparatus which can be used for forming the packs of which details are shown in Figures 1 to 3. This apparatus 10 comprises a machine table 12 across which the first film 1 from a supply roll 14 is fed towards a delivery end 16 of the table 12.

First of all the film 1 passes a corner cutting station 18 at which the pre-scored cuts (7 in Figure 1) are formed, and then it proceeds to a thermoforming station 20 at which the bottom film is formed into a generally tray-like configuration ready to receive the conforming trays 5 shown in Figures 1 to 3.

These trays 5, together with the product articles 22 thereon are introduced into the trays defined by the film 1 and with it they then enter a sealing station 24.

In the sealing station 24 the products 22 and the trays 5 are covered by the upper film 6 which is advanced from its supply roll 26 over a roller 28 and past radiant heaters 30 which pre-heat the film 6 to help it to bond to the lower film 1 on contact. The films 1 and 6 come together during entry of the pre-formed lower film 1, the trays 5 and the covering films 6 at a sealing chamber 32.

On leaving the sealing chamber 32, the succession of now sealed packs moves onwards past a transverse severing station 34 at which the leading pack, or row of two or more side-by-side packs, is separated from the next successive pack or row of packs. Thence the packs pass to the longitudinal slitting station 36 at which the scrap along the margins of the films is removed and where there are various side-by-side packs in each row these are separated from one another.

## Claims

1. A pack comprising:- a laminar support (5) having at least one product (22) thereon; a multi-layer first film (2, 3) covering the reverse side of the support i.e. the one other than that on which the or each product rests; and a second film (6a, 6b) covering the or each product and the side of the support on which it rests to encapsulate the product(s) against the support;
characterised in that the first and second films project laterally beyond the perimeter of the support around its full extent and being sealed together; in that the bond strength of the bond between two layers (2 and 3) of said first film close to the interface (3/6b) between the first and second films is lower than the bond strength between the first (2, 3) and second (6a, 6b) films at said interface, whereby delamination at said lower strength bond is possible and in that said support is more rigid than either of said first and second films.

2. A pack according to claim 1, characterised in that said support is a tray (5) having a rim with sharp edges for initiating a tear in said portion of the first film (2, 3) upon delamination of said first film.

3. A pack according to either of the preceding claims, characterised in that the support is sufficiently rigid to rupture the delaminated part of said first film comprising the layers thereof between said bond and said interface.

4. A pack according to any one of claims 1 to 3, characterised in that the or each product (22) is all or part of a ready-to-heat meal which has been heat treated in situ in the pack.

5. A method of forming an easy-open pack comprising:- placing at least one product on one side of a relatively rigid support; applying a multi-layer first film to the reverse side of the support; and covering the product and said one side of the support with a second film; characterised in that the first and second films each extend laterally beyond the perimeter of said support and are bonded to one another at the projecting part; and in that said first film has a bond strength between two adjacent layers close to the interface between the first and second films which is lower than the bond strength between said first and second films, and in that said support is more rigid than either of said first and second films.

6. A method according to claim 5, characterised by further including the step of cutting said first film across and adjacent a corner of the support, to facilitate delamination at said bond of lower strength.

7. A method according to either of claims 5 and 6, characterised in that the support, with its product thereon, and enclosed within the first and second films, is subjected to heat treatment before and after storage and display.

8. A method according to any one of claims 5 to 7, characterised in that said at least one product is all or part of a ready-to-heat meal.


## Patentansprüche

1. Verpackung mit: - einem plattenförmigen Träger (5) mit zumindest einem sich darauf befindlichen Produkt (22); einer mehrschichtigen ersten Folie (2, 3), die die Rückseite des Trägers überdeckt, d. h. die andere Seite als die, auf der sich das oder jedes Produkt befindet; und mit einer zweiten Folie (6a, 6b), die das oder jedes Produkt und die Seite des Trägers überdeckt, auf der es liegt, um das Produkt/die Produkte gegen den Träger zu umschließen;
dadurch gekennzeichnet, daß die ersten und zweiten Folien seitlich über den Umfang des Trägers um seine volle Ausdehnung vorstehen und zusammengeschweißt sind; daß die Stärke der Bindung zwischen zwei Schichten (2 und 3) der ersten Folie nahe der Schnittstelle (3/6b) zwischen der ersten und zweiten Folie geringer ist als die Bindungsstärke zwischen den ersten (2, 3) und zweiten (6a, 6b) Folien an der Schnittstelle, wodurch ein Abziehen an der geringeren Bindung möglich ist, und daß der Träger steifer als die erste und die zweite Folie ist.

2. Verpackung nach Anspruch 1, dadurch gekennzeichnet, daß der Träger eine Mulde (5) mit einem scharfkantigen Rand ist, um ein Einreißen in diesem Bereich der ersten Folie (2, 3) beim Abziehen der ersten Folie einzuleiten.

3. Verpackung nach einem der vorhergehenden Ansprüche, dadurch gekennzeichnet, daß der Träger steif genug ist, um den abgezogenen Teil der ersten Folie mit seinen Schichten zwischen der Bindung und der Schnittstelle abzureißen.

4. Verpackung nach einem der Ansprüche 1 bis 3, dadurch gekennzeichnet, daß das oder jedes Produkt (22) zur Gänze oder Teil einer aufwärmbaren Mahlzeit sind, die an Ort und Stelle in der Verpackung wärmebehandelt wurde.

5. Verfahren zur Herstellung einer leicht zu öffnenden Verpakkung, durch: - Aufbringung zumindest einem Produkt auf eine Seite eines relativ steifen Trägers; Anbringen einer mehrschichtigen ersten Folie auf der Rückseite des Trägers; und Abdecken des Produkts auf der einen Seite des Trägers mit einer zweiten Folie; dadurch gekennzeichnet, daß die ersten und zweiten Folien sich jeweils seitlich über den Umfang des Trägers erstrecken und in dem hervortretenden Bereich aneinander befestigt sind; und dadurch, daß die erste Folie zwischen zwei nebeneinanderliegenden Schichten nahe der Schnittstelle zwischen der ersten und zweiten Folie eine Bindungsstärke hat, die geringer ist, als die Bindungsstärke zwischen der ersten

**EP 0 415 520 B1**

und zweiten Folie, und dadurch, daß der Träger steifer ist als die erste oder zweite Folie.

6. Verfahren nach Anspruch 5, dadurch gekennzeichnet, daß es weiterhin den Schritt umfaßt, die erste Folie über und nahe einer Ecke des Trägers zu schneiden, um ein Abziehen bei der nicht so starken Bindung zu erleichtern.

7. Verfahren nach Anspruch 5 oder 6, dadurch gekennzeichnet, daß der Träger mit dem sich darauf befindlichen Produkt und umschlossen von der ersten und zweiten Folie mit Wärme behandelt wird, und zwar vor und nach der Lagerung und im Regal.

8. Verfahren nach einem der Ansprüche 5 bis 7, dadurch gekennzeichnet, daß zumindest ein Produkt zur Gänze oder Teil einer aufwärmbaren Mahlzeit ist.

**Revendications**

1. Emballage comprenant : - un support laminaire (5) présentant au moins un produit (22) sur celui-ci; un premier film multicouche (2, 3) couvrant le côté arrière du support, c'est-à-dire le côté autre que celui sur lequel le ou chaque produit repose; et un deuxième film (6a,6b) couvrant le ou chaque produit et le côté du support sur lequel il repose pour encapsuler le ou les produits contre le support; caractérisé en ce que les premier et deuxième films font saillie latéralement au-delà du périmètre du support autour de son étendue entière et qu'ils sont scellés ensemble; en ce que la résistance de cohésion de la liaison entre deux couches (2 et 3) dudit premier film proche de l'interface (3/6b) entre les premier et deuxième films est inférieure à la résistance de cohésion entre les premier (2, 3) et deuxième (6a, 6b) films à ladite interface, par quoi une délamination à ladite résistance de cohésion inférieure est possible, et en ce que ledit support est plus rigide que l'un ou l'autre desdits premier et deuxième films.

2. Emballage selon la revendication 1, caractérisé en ce que ledit support est un plateau (5) possédant un rebord avec des bords tranchants pour initier une déchirure dans ladite portion du premier film (2, 3) lors de la delamination dudit premier film.

3. Emballage selon l'une des revendications précédentes, caractérisé en ce que le support est suffisamment rigide pour rompre la partie délaminée dudit premier film, comprenant les couches de celui-ci entre ladite cohésion et ladite interface.

4. Emballage selon l'une des revendications 1 à 3, caractérisé en ce que le ou chaque produit (22) constitue l'ensemble ou une partie d'un repas prêt à chauffer qui a été traité par la chaleur à l'intérieur de l'emballage.

5. Procédé pour former un emballage facile à ouvrir, comprenant les étapes consistant à : - placer au moins un produit sur un côté d'un support relativement rigide; appliquer un premier film multicouche au côté arrière du support; et couvrir le produit et ledit côté du support d'un deuxième film; caractérisé en ce que les premier et deuxième films s'étendent chacun latéralement au-delà du périmètre dudit support et sont liés l'un à l'autre à la partie en saillie; et en ce que ledit premier film possède une résistance de cohésion entre deux couches adjacentes proches de l'interface entre les premier et deuxième films qui est inférieure à la résistance de cohésion entre lesdits premier et deuxième films, et en ce que ledit support est plus rigide que l'un ou l'autre desdits premier et deuxième films.

6. Procédé selon la revendication 5, caractérisé en ce qu'il comprend en outre l'étape consistant à découper ledit premier film à travers et adjacent à un coin du support afin de faciliter le décollage ou la délamination à ladite cohésion de résistance inférieure.

7. Procédé selon l'une des revendications 5 et 6, caractérisé en ce que le support, avec son produit, et enfermé à l'intérieur des premier et deuxième films, est soumis à un traitement de chaleur avant et après le stockage et l'expostion.

8. Procédé selon l'une des revendications 5 à 7, caractérisé en ce que ledit, au moins un produit, constitue l'ensemble ou une partie d'un repas prêt à chauffer.

Fig.1.

Fig.2.

Fig.3.

Fig. 4.

EP 0 415 520 B1